Europäisches Patentamt

European Patent Office

Office européen des brevets

(19)

(11) Veröffentlichungsnummer: **0 282 530 B1**

# (12) EUROPÄISCHE PATENTSCHRIFT

(45) Veröffentlichungstag der Patentschrift :
27.11.91 Patentblatt 91/48

(51) Int. Cl.⁵ : **B62M 1/02**

(21) Anmeldenummer : 87905937.6

(22) Anmeldetag : 23.09.87

(86) Internationale Anmeldenummer :
PCT/CH87/00121

(87) Internationale Veröffentlichungsnummer :
WO 88/02331 07.04.88 Gazette 88/08

(54) APPARAT ODER FAHRZEUG, INSBESONDERE FAHRRAD, MIT TRETKURBELANTRIEB.

(30) Priorität : 23.09.86 CH 3798/86

(43) Veröffentlichungstag der Anmeldung :
21.09.88 Patentblatt 88/38

(45) Bekanntmachung des Hinweises auf die
Patenterteilung :
27.11.91 Patentblatt 91/48

(84) Benannte Vertragsstaaten :
AT BE CH DE FR GB IT LI LU NL SE

(56) Entgegenhaltungen :
BE-A- 398 350
DE-C- 81 199
FR-A- 896 837

(73) Patentinhaber : GEISSMANN, Marco
Zollikerstrasse 275
CH-8008 Zürich (CH)

(72) Erfinder : GEISSMANN, Marco
Zollikerstrasse 275
CH-8008 Zürich (CH)

(74) Vertreter : EGLI-EUROPEAN PATENT
ATTORNEYS
Horneggstrasse 4
CH-8008 Zürich (CH)

## Beschreibung

Die Erfindung bezieht sich auf ein Gerät mit Tretkurbelantrieb, insbesondere auf ein Fahrrad, welches einen Rahmen, einen entsprechend daran angeordneten Sitz für eine eine Kraftquelle bildende Person sowie eine am Rahmen gelagerte und mit mindestens einem Pedalarm versehene Tretkurbel umfasst, auf welchen Pedalarm von dem entsprechend zugeordneten Bein oder Fuss sowie von einem mit dem jeweiligen Oberschenkel der Person in Wirkverbindung stehenden und an der Tretkurbel angelenkten Hebelsystem eine Kraft auf den betreffenden Pedalarm übertragbar und dadurch über entsprechend mit der Tretkurbel wirkverbundene Übertragungselemente ein Rad antreibbar ist.

Aus der DE-C 81 119 ist eine Antriebsvorrichtung für ein Fahrrad bekannt, bei welchem die beiden Tretkurbeln über ein entsprechend ausgebildetes Hebelsystem betätigt werden. Die beiden Füsse der Person sind dabei auf zwei am Rahmenschenkel befestigte Trägerelemente abgestützt, während die Oberschenkel über entsprechend ausgebildete Bogenelemente mit dem Hebelsystem im Eingriff stehen. Bei Betätigung dieses Hebelsystems wird weitgehend nur eine durch die wechselnde und im wesentlichen vom abgestützten Fussgelenk bewirkte Hub- und Senkbewegung der Oberschenkel ausgeübte Kraft auf die Tretkurbel übertragen. Von den Füssen wird hierbei keine Kraft direkt auf die Tretkurbel ausgeübt.

Aus der FR-A 896 837 ist eine weitere, etwa als Hebelsystem ausgebildete Antriebsvorrichtung für ein Fahrrad bekannt, welches mindestens eine mittels im Abstand zueinander angeordneter Riemen am Oberschenkel der Person befestigte Schiene sowie eine Stange umfasst, welche mit dem einen Ende an der Schiene angelenkt und mit dem anderen Ende mit der Tretkurbel wirkverbunden ist. Bei diesem Hebelsystem wird zusammen mit der Kraft des Beines zusätzlich eine bei der Oberschenkelbewegung ausgeübte Zugkraft auf die Tretkurbel übertragen. Ein wesentlicher Nachteil dieser Antriebsvorrichtung besteht darin, dass durch das Festbinden der Schiene am Oberschenkel die Bewegungsmöglichkeit des gesamten Beines sowie dessen Durchblutung stark eingeschränkt wird.

Aus der BE-A 398 350 ist es weiterhin bekannt, als zusätzliche Kraftübertragung ein geschirrartig ausgebildetes Zugelement vorzusehen, welches um die Hüfte der Person herumgeführt und jeweils am Ober- und Unterschenkel mit je einem Querriemen gehalten und mit seinen beiden Enden an dem jeweiligen Pedalarm der Tretkurbel befestigt ist. Mit diesem Zugelement wird zusätzlich zu der vom jeweiligen Bein ausgeübten Tretkraft durch die Oberschenkelbewegung eine Zugkraft auf die Tretkurbel ausgeübt. Hierbei besteht der Nachteil, dass die entsprechend mit dem Zugelement sowie den Querriemen wirkverbundenen Körperteile der Person stark beansprucht werden (Reibung des Zugelementes am Körper), und zusätzlich wird die Beweglichkeit und Durchblutung eingeschränkt.

Die bekannten, bei ortsfesten Geräten, Fahrrädern oder anderen Fahrzeugen verwendeten Tretkurbelantriebe sind derart ausgebildet, dass jeweils nur ein Teil der Tretkurbel-Umdrehung kraftbelastet ist, wobei der andere, mindestens gleich grosse Teil der Tretkurbel-Umdrehung weitgehend ohne Wirkung abläuft.

Der Erfindung liegt die Aufgabe zugrunde, einen Tretkurbelantrieb für ein Gerät, insbesondere für ein Fahrrad dahingehend zu verbessern, dass unter Beibehaltung einer ausreichenden Bewegungsfreiheit der Betätigungsglieder der als Kraftquelle wirkenden Bedienungsperson die auf die jeweilige Tretkurbel ausgeübte Kraft vergrössert wird.

Diese Aufgabe wird erfindungsgemäss dadurch gelöst, dass

- das zur Erhöhung der auf die Tretkurbel wirkenden Kraft ausgebildete Hebelsystem mit mindestens einem dem entsprechenden Pedalarm zugeordneten Antriebhebel an einem am Rahmen angeordneten Lagersupport gelagert ist, derart,
- dass der Antriebshebel einerseits um eine oberhalb des Sitzes befindliche Drehachse schwenkbar ist und andererseits mit dem entsprechenden Oberschenkel der Person in Eingriff steht, und
- dass mindestens ein flexibles Zugelement vorgesehen ist, welches mit dem einen Ende an einem unterhalb des Sitzes angeordneten Lager befestigt und über ein am zugeordneten Antriebshebel vorgesehenes Umlenkglied geführt mit dem anderen Ende mit dem betreffenden Pedalarm der Tretkurbel wirkverbunden ist.

Weitere Merkmale der Erfindung ergeben sich aus der folgenden Beschreibung in Verbindung mit der Zeichnung und den einzelnen Patentansprüchen.

Die Erfindung wird nachstehend unter Bezugnahme auf die Zeichnung näher beschrieben. Es zeigt:

Fig. 1 eine schematisch dargestellte Seitenansicht eines als Fahrrad ausgebildeten Gerätes mit dem von einer darauf sitzenden Person betätigbaren Tretkurbelantrieb,

Fig. 2 das in schematischer Ansicht dargestellte Fahrrad oder Gerät gemäss Pfeilrichtung II in Fig.1,

Fig. 3 die Kraftübertragungselemente in räumlicher Darstellung,

Fig. 4 eine Variante der Kraftübertragungselemente in räumlicher Darstellung,

Fig. 5 eine schematische Seitenansicht einer weiteren Variante der Kraftübertragungselemente und einen Teilschnitt a - a,

Fig. 6 eine schematisch dargestellte Seitenansicht eines Fahrrades und seines Fahrers mit am Fahrrad angeordneten Kraftübertragungselementen ähnlich wie in Fig. 1,

Fig. 7 einen schematisch dargestellten Ausschnitt des in Fig. 6 dargestellten Uebertragungsmechanismus im Bereich der Tretkurbel bzw. der unteren Befestigung des flexiblen Zugelementes, und

Fig. 8 einen schematisch dargestellten Ausschnitt des Uebertragungsmechanismus im Bereich der oberen Befestigung des flexiblen Zugelementes.

Die Erfindung geht von der Ueberlegung aus, dass für den erfolgreichen Einsatz weiterer Muskelpartien für die Uebertragung von Kräften auf die Tretkurbel mindestens annähernd körperanaloge Elemente eingesetzt werden müssen. Diese Elemente sollen sowohl an bestehenden Fahrrädern angebaut als auch bei einer Neukonstruktion des Fahrrades integriert werden können.

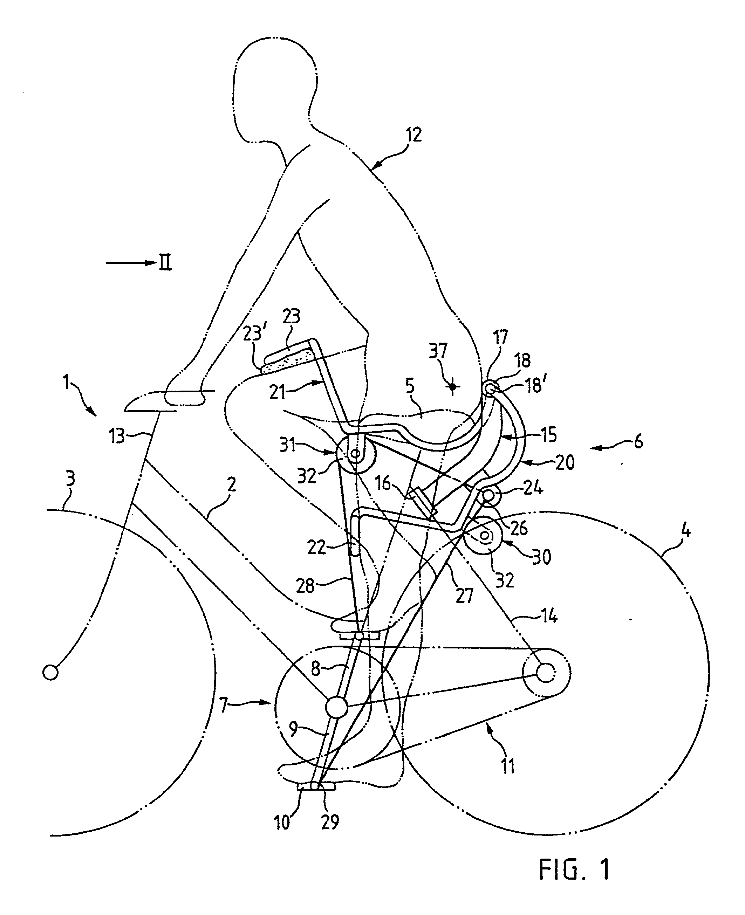

Das in Fig. 1 dargestellte Fahrrad 1 weist einen Rahmen 2, ein Vorderrad 3, ein Hinterrad 4, einen Sitz 5, eine Tretkurbel 7 mit zwei Pedalhebeln 8, 9 und eine Kraftübertragung 11, beispielsweise einen Kettentrieb, auf. Der Fahrer 12 sitzt in der üblichen Weise auf dem Sitz 5, lenkt das Fahrrad 1 mit Hilfe einer schwenkbaren Lenkstange 13 und bewegt das Fahrzeug, indem er mit seinen Beinen die Tretkurbel 7 betätigt.

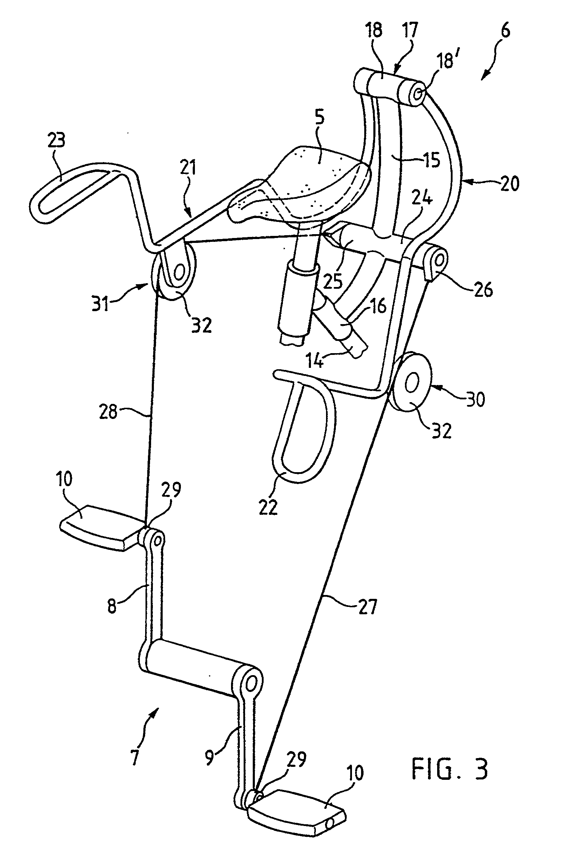

Am Rahmen 2 ist an einer geeigneten Stelle, siehe Fig. 3, beispielsweise an der Hinterradstrebe 14, ein Lagersupport 15 mittels einer Befestigungsvorrichtung 16, beispielsweise Klemmplatten, befestigt. Der Lagersupport 15 ist im wesentlichen als eine gegen den Rücken sich erstreckende Strebe ausgebildet, die an ihrem obern Ende 17 ein Lagergehäuse 18 aufweist, an welchem zwei Antriebshebel 20, 21 schwenkbar gelagert sind. Es ist vorteilhaft, dass die Lage der Hebeldrehachse 18' möglichst nahe bei der Hüftgelenkachse 37, siehe Fig. 1, liegt, da diese Abweichung auch eine Verschiebung des Kraftangriffspunktes auf dem Oberschenkel während des Bewegungsablaufes bewirkt. Die Antriebshebel 20, 21 weisen eine Verlängerung 22, 23 auf, die sich auf den Oberschenkel des Fahrers zu stützen bestimmt sind. Die Verlängerungen 22, 23 sind als gebogenes Ende eines Metall- oder Kunststoffstabes ausgebildet, könnten jedoch auch als der Form des Oberschenkels angepasste Platte geformt sein. Zudem könnte der Antriebshebel 20 21 mit einem Band am Oberschenkel befestigt sein; er könnte auch mit einem Polster 23 (Fig. 1) versehen sein.

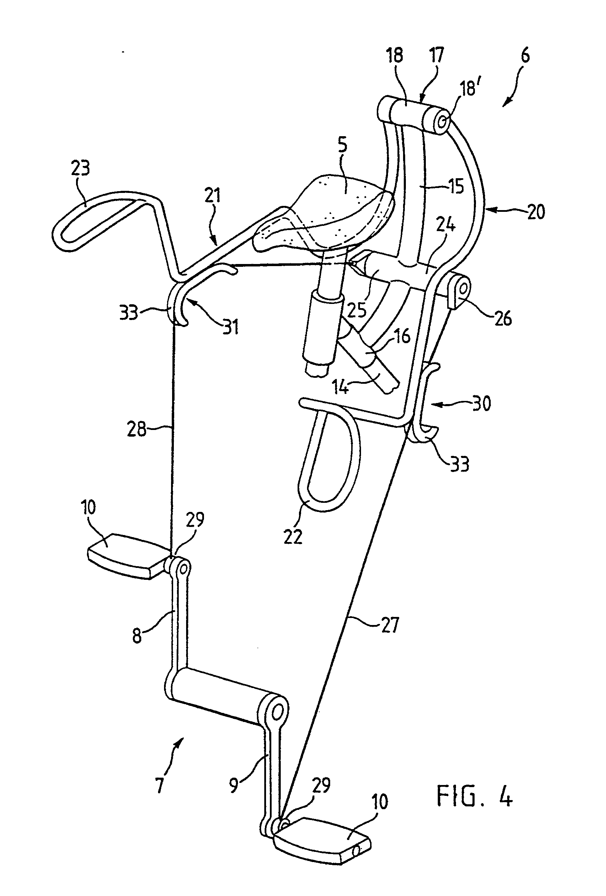

Am Lagersupport 15 sind zwei Lagerzapfen 24, 25 angeformt, an welchem das eine Ende 26 eines flexiblen Zugelementes 27, 28 befestigt ist. Das andere Ende 29 des flexiblen Zugelementes 27, 28 ist an dem Pedalhebel 8, 9 bei den Pedalen 10 befestigt. Das flexible Zugelement 27, 28 kann ein Drahtseil, eine Kette oder ein Federstahldraht sein und ist über ein an der Unterseite des Antriebhebels 20, 21 befestigten Umlenkgliedes geführt. Das Umlenkglied 30, 31 kann eine Rolle 32, siehe Fig. 3, oder eine Kulisse 33, siehe Fig. 4, sein.

Im Falle einer Kulisse 33 ist es nicht erforderlich, dass das eine Ende 26 des flexiblen Zugelementes 27, 28 am Lagerzapfen 24, 25 des Lagersupports 15 befestigt sein muss, es kann auch am Antriebshebel 20, 21 bzw. auch an der Kulisse 33 befestigt sein so dass der Lagerzapfen 24, 25 entfallen kann.

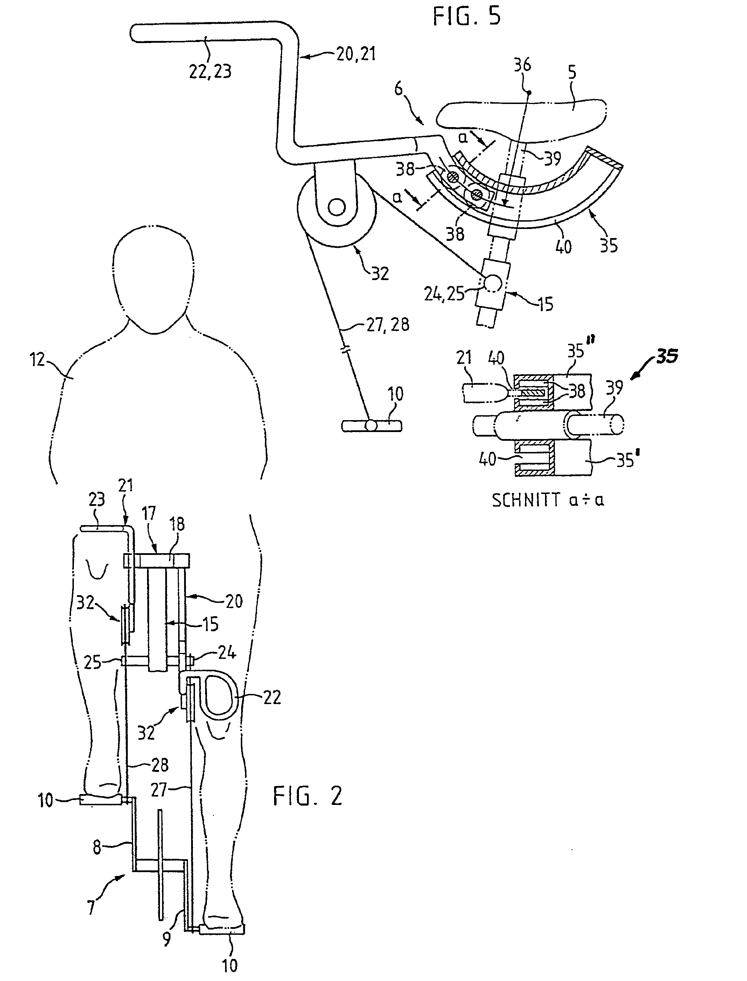

Fig. 2 verdeutlicht die Lage der beschriebenen Uebertragungselemente, wobei gleiche Bezugszeichen mit denjenigen der andern Figuren übereinstimmen. Die Gesamtheit der Uebertragungselemente bildet einen Uebertragungsmechanismus 6, bei dem drei in Paaren angeordnete Elemente in körperanaloger Weise angeordnet sind, nämlich: Das Lagergehäuse 18 mit den Lagern für die Antriebshebel 20, 21 hinter dem Hüftgelenk des auf dem Sattel 5 sitzenden Fahrers 12, das Umlenkglied 30, 31 beim Kriegelenk und das über das Umlenkglied 30, 31 geführte flexible Zugelement 27, 28, analog etwa der über das Knie laufenden Sehne, wobei das eine Ende 26 am Lagersupport 15 und das andere Ende 28 zwischen dem Fuss und dem Pedalhebel 8, 9 auf der Achse der Pedale 10 liegt. Durch diese Anordnung kann die Zugbewegung der Oberschenkel gegensinnig zur Tretbewegung auf die Tretkurbel 7 übertragen werden. Im Gegensatz zu der bei Rennfahrrädern erfolgenden Kraftübertragung mit Hilfe des im Pedalenkorb festgeschnallten Fusses wird bei der vorliegenden Ausführung durch die gelenkige Befestigung des flexiblen Zugelementes 27, 28 an der Pedalachse ein dem Fuss und Fussgelenk sowie dem Unterschenkel analoges Kraftübertragungselement eliminiert. Die grosse Kraft, welche die Oberschenkelmuskulatur aufbringen kann und gegenüber den übrigen Beinmuskelpartien für diese Bewegung wesentlich stärker ist, kann durch die Uebertragung auf maschinelle Uebertragunselemente voll ausgenützt werden, insbesondere nach Ueberwinden des unteren Totpunktes des Zugelementes 27, 28, an welcher durch die geometrischen Verhältnisse des Kraftangriffes auf dem Zugelement 27, 28 eine grosse Kraftübersetzung stattfindet. Da bei dieser Art der menschlichen Energieübertragung die beiden Beine gegensinnig arbeiten, ist der Oberkörper von der Funktion der Kraftabstützung beim Treten weitgehend entlastet, was als angenehm empfunden wird. Bei zusätzlichem Einsatz der Oberkörperund Armmuskulatur als Widerlager kann die Kraftübertragung noch erhöht werden. Ausserdem wird die Zugbewegung des Oberschenkels nach kurzer Angewöhnung reflexartig und mit unbewusster Routine erfolgen.

Die in Fig. 5 dargestellte Varainte der Kraftübertragungselemente 6 verwendet für die Lagerung der Antriebshebel 20, 21 je eine Kurvenführung 35. Die Kurvenführung 35 ist ein Hohlprofil, in welchem einer der Antriebshebel 20, 21 mittels Rollen 38 geführt ist. Die Kurvenführung 35 kann kreissegmentförmig mit einem Mittelpunkt 36 oder auch mit einer anderen Krümmung geformt sein. Wesentlich ist lediglich, dass der Drehpunkt 36 auf derjenigen Achse 37 (Fig. 1) liegt, welche durch die Hüftgelenke der Person geht. Die Kurvenführungen 35 sind an der den Sattel 5 tragenden Strebe 39 befestigt, an welcher auch der Support 15 mit den Armen 24, 25 in Abweichung von Fig. 1 befestigt ist, in welcher der Support an der Hinterradstrebe 14 befestigt ist. Das Profil der Kurvenführungen 35 weist auf der Unterseite einen Schlitz 40 auf, durch den der Antriebshebel 20, 21 ragt. Die Kurvenführungen 35 ändern jedoch nichts an dem grundsätzlichen Aufbau der Uebertragungselemente 6. Durch diese Variante wird lediglich die geringfügige Verschiebung der sich auf den Oeberschenkel des Fahrers stützenden Verlängerungen 22, 23 vermieden.

Selbstverständlich müssen bei einem solchen Gerät oder Fahrzeug bestimmte Dimensionen auf die Körpergrösse und die Eigenart der Bewegung des Benützers abgestimmt sein. Eine solche Anpassung kann durch die Einstellbarkeit der Elemente des Uebertagungsmechanismus erreicht werden.

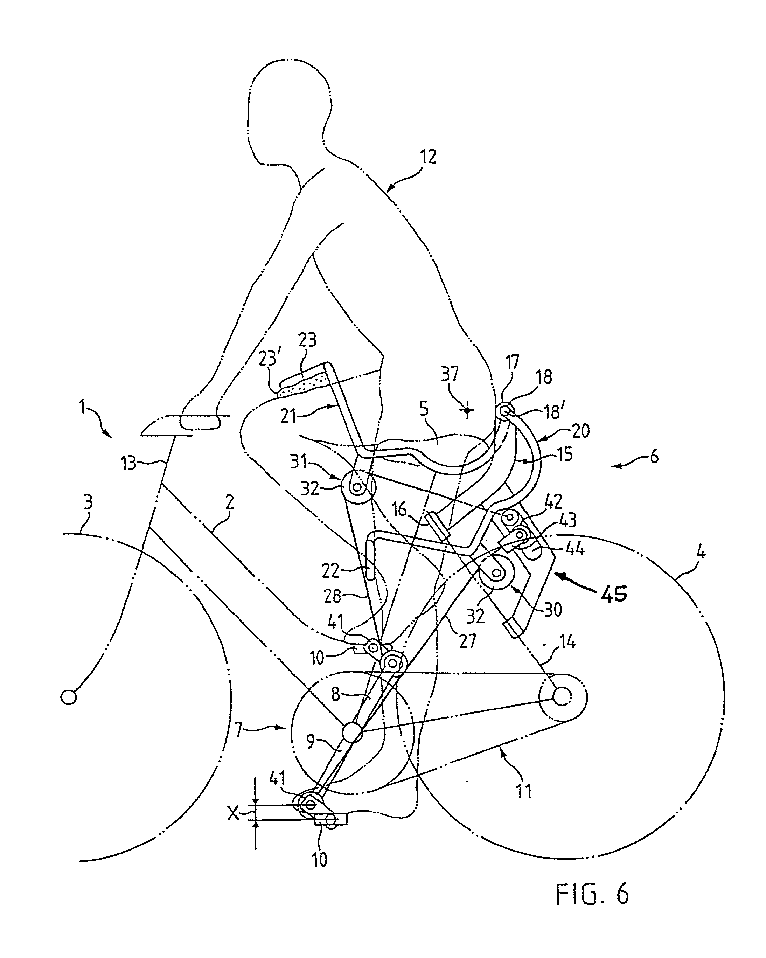

Eine grundsätzliche Anpassung kann dadurch erreicht werden, dass am Uebertragungsmechanismus einzelne Elemente eine spezielle Ausgestaltung erfahren und der Uebertragungsmechanismus durch den Einbau weiterer Elemente verfeinert wird. Eine solche Ausführung zeigt die in Fig. 6, 7 und 8 dargestellte Variante.

In Fig. 6 sind diese Zusatzmittel dargestellt. Die Bezugszahlen stimmen mit denjenigen des genannten älteren Schutzrechtes überein und werden nur soweit beschrieben, als es für die Erläuterung dieser Zusatzmittel erforderlich ist.

Die Pedalhebel 8, 9 der Tretkurbel 7 weisen an ihrem freien Ende festverbundene zusätzliche Pedalhebel auf, an deren Freien Enden die Pedale 10 drehbar gelagert sind. Durch diese zusätzlichen Pedalhebel 41 wird erreicht, dass die Lage der Fussohle sich in seiner Höhe gegenüber dem freien Ende der Pedalhebel 8, 9 ändert, während aber das Ende 29 des flexiblen Zugelementes 27, 28 am freien Ende der Pedalhebel 8, 9 befestigt ist. Diese Aenderung ist als Aenderung der Höhenlage X in Fig. 6 eingetragen.

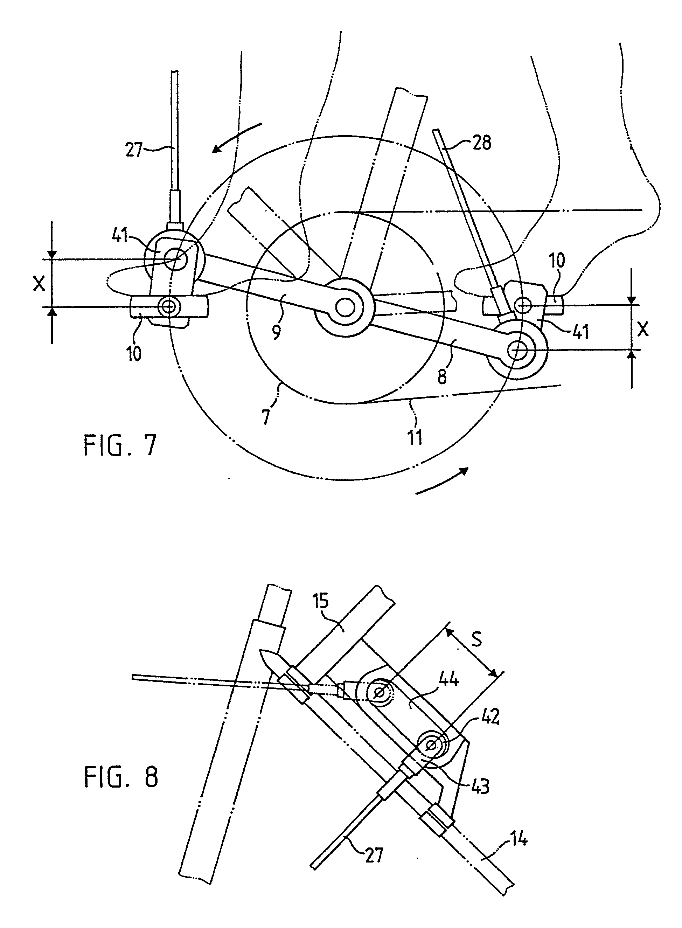

In Fig. 7 ist das Mass X noch deutlicher erkennbar. Hier ist nun auch die unterschiedliche Fersenstellung in der Tretphase, siehe den Fuss links in Fig. 7 und in der Zugphase, siehe den Fuss rechts in Fig. 7, ersichtlich. Beim Fuss in der Tretphase ist die Ferse weniger stark angehoben als in der Zugphase. In der Tretphase soll das flexible Zugelement 27, 28 entspannt werden, was durch die tiefere Lage des Fusses gegenüber dem Ende 29 des flexiblen Zugelementes erreicht wird. Bei der Zugphase ist es gerade umgekehrt, denn das Pedal 10 liegt höher als das untere Ende des flexiblen Zugelementes 27, 28, so dass dadurch ein zusätzliches Spannen desselben durch den Antriebshebel 20, 21 auftritt.

Die Zusatzmittel im Bereich der oberen Befestigung des flexiblen Zugelementes 27, 28 sind in Fig. 8 dargestellt und bestehen aus einer Rolle 42, an welcher das flexible Zugelement 27, 28 mit einer U-Bride 43 befestigt ist, sowie aus einer Rollenbahn 41, welche beispielsweise am Lagersupport 15 und auf den Hinterradstreben 14 abgestützt ist.

Auf diese Weise kann sich der obere Befestigungspunkt des flexiblen Zugelementes in Abhängigkeit von der Richtung der Zugkraft in gewissen Grenzen bewegen, wodurch eine weitere Anpassung des flexibilen Zugelementes 27, 28 an die erforderliche Spannung bzw. Entspannung in der jeweiligen Phase erreicht wird.

**Patentansprüche**

1. Gerät mit Tretkurbelantrieb, insbesondere Fahrrad, welches einen Rahmen (2), einen entsprechend daran angeordneten Sitz (5) für eine eine Kraftquelle bildende Person sowie eine am Rahmen (2) gelagerte und mit mindestens einem Pedalarm versehene Tretkurbel (7) umfasst, auf welchen Pedalarm von dem entsprechend zugeordneten Bein oder Fuss sowie von einem mit dem jeweiligen Oberschenkel der Person in Wirkverbindung stehenden und an der Tretkurbel (7) angelenkten Hebelsystem eine Kraft auf den betreffenden Pedalarm übertragbar und dadurch über entsprechend mit der Tretkurbel (7) wirkverbundene Übertragungselemente (11) ein Rad (4) antreibbar ist, dadurch gekennzeichnet,
   – dass das zur Erhöhung der auf die Tretkurbel (7) wirkenden Kraft ausgebildete Hebelsystem mit mindestens einem dem entsprechenden Pedalarm (8,9) zugeordneten Antriebshebel (20,21) an einem am Rahmen (2) angeordneten Lagersupport (15,35) gelagert ist, derart,
   – dass der Antriebshebel (20,21) einerseits um eine oberhalb des Sitzes (5) befindliche Drehachse (18',36) schwenkbar ist und andererseits mit dem entsprechenden Oberschenkel der Person in Eingriff steht, und
   – dass mindestens ein flexibles Zugelement (27,28) vorgesehen ist, welches mit dem einen Ende an einem unterhalb des Sitzes (5) angeordneten Lager (24) befestigt und über ein am zugeordneten Antriebshebel (20,21) vorgesehenes Umlenkglied (30,31) geführt mit dem anderen Ende mit dem betreffenden Pedalarm (8,9) der Tretkurbel (7) wirkverbunden ist.
   2. Gerät nach Anspruch 1, dadurch gekennzeichnet, dass der bogenförmig ausgebildete Lagersupport (15) an dem einen Ende ein die oberhalb des Sitzes (5) angeordnete Drehachse (18′) bildendes Lagergehäuse (18) für zwei seitlich daran schwenkbar gelagerte Antriebshebel (20,21) sowie das unterhalb des Sitzes (5) am Lagersupport (15) angeordnete Lager (24) für zwei seitlich daran gelagerte Zugelemente (27,28) umfasst und mittels einer am anderen Ende vorgesehenen Vorrichtung (16) am Rahmenteil (14) des Rahmens (2) angeordnet und befestigt ist.

3. Gerät nach Anspruch 1, dadurch gekennzeichnet, dass der Lagersupport (35) unterhalb des Sitzes (5) angeordnet ist und zwei kreisbogensegmentartige Führungsstücke (35′,35″) umfasst, welche seitlich am Rahmenteil (14) des Rahmens (2) befestigt und derart ausgebildet sind, dass sich die Drehoder Schwenkachse (36) der in den Führungsstücken (35′,35″) entlang der gebildeten Kurvenbahn verschiebbar gelagerten Antriebshebel (20,21) oberhalb des Sitzes (5) befindet und möglichst nahe der Hüftgelenkachse (37) der darauf sitzenden Person liegt.

4. Gerät nach Anspruch 1, dadurch gekennzeichnet, dass das auf der Tretkurbel (7) zugewandten Seite an jedem Antriebshebel (20,21) angeordnete Umlenkglied (30,31) für das Zugelement (27,28) als eine drehbar gelagerte Rolle oder als im wesentlichen bogenförmige Kulisse (33) ausgebildet ist.

5. Gerät nach Anspruch 1, dadurch gekennzeichnet, dass das flexible Zugelement (27,28) mit dem einen Ende an dem entsprechend zugeordneten Antriebhebel (20,21) und mit dem anderen Ende an dem entsprechend zugeordneten Pedalarm (8,9) der Tretkurbel (7) befestigt ist.

6. Gerät nach Anspruch 1 mit einer Einrichtung zum Spannen und Entspannen der einzelnen Kraftübertragungselemente während der Tret- und Zugphase, dadurch gekennzeichnet,

– dass an jedem Pedalarm (8,9) ein weiterer Hebel (41) gelagert ist, an welchen im Abstand (X) zu der ersten Drehachse je eine zweite Drehachse für die Pedale (10) vorgesehen ist, und

– dass die beiden mit dem einen Ende an der ersten Drehachse des Pedalarms (8,9) gelagerten und über die am Antriebshebel (20,21) angeordneten Umlenkglieder (30,31) geführten Zugelemente (27,28) am anderen Ende mittels daran angeordneter Rollen (42) jeweils in einer Rollenbahn (44) geführt sind, wobei

– die Rollenbahnen (44) in entsprechend unterhalb des Sitzes (5) am Rahmenteil (14) befestigten Lagerteilen (45) angeordnet sind.

## Revendications

1. Appareil ou véhicule, notamment bicyclette comportant un entraînement à pédales, comprenant un cadre (2), un siège (5) monté sur celui-ci de façon appropriée à une personne constituant une source d'énergie ainsi qu'un pédalier (7) placé sur le cadre (2) et comportant au moins un bras à pédale, sur lequel le pied ou la jambe associé ainsi qu'un système à levier articulé sur le pédalier (7) et en liaison active avec la cuisse respective de la personne peuvent transmettre une force sur le bras à pédale concerné, ce qui permet d'entraîner une roue (4) au moyen d'éléments de transmission (11) en liaison active de façon correspondante avec le pédalier (7), caractérisé

– en ce que le système à levier prévu pour augmenter la force exercée sur le pédalier (7) comporte au moins un levier d'entraînement (20, 21) associé à la manivelle de pédale (8, 9) correspondant et placé sur un support de palier (15, 35) monté sur le cadre (2) de façon

– que le levier d'entraînement (20, 21) peut pivoter, d'une part, autour d'un axe de rotation (18′, 36) situé au-dessus du siège (5) et qui, d'autre part, est en prise avec la cuisse correspondante de la personne, et

– en ce qu'il est prévu au moins un élément de traction (27, 28) flexible qui est fixé par l'une de ses extrémités sur un palier (24) placé en-dessous, du siège (5) et guidé sur un organe de renvoi (30, 31) prévu sur le levier d'entraînement (20, 21) associé, et qui est en liaison active par son autre extrémité avec la manivelle de pédale (8, 9) concerné du pédalier (7).

2. Appareil ou véhicule suivant la revendication 1, caractérisé en ce que le support de palier (15) en forme d'arc comprend, à une extrémité, un logement de palier (18) constituant l'axe de rotation (18′) placé au-dessus du siège (5), logement prévu pour deux leviers d'entraînement (20, 21) montés pivotants de part et d'autre, ainsi que le palier (24) placé en-dessous du siège (5) sur le support de palier (15) destiné à deux éléments de traction (27, 28) disposés de part et d'autre de celui-ci, et en ce que le support de palier (15) est disposé et fixé au moyen d'un dispositif (16) prévu sur son autre extrémité sur la partie (14) du cadre (2).

3. Appareil ou véhicule suivant la revendication 1, caractérisé en ce que le support de palier (35) est placé en-dessous du siège (5) et comprend deux pièces de guidage (35′, 35″) constitués par des segments en arc de cercle fixées de part et d'autre de la partie (14) du cadre (2) et réalisées de façon que l'axe de rotation ou de pivotement (36) des leviers d'entraînement (20, 21) coulissant dans les pièces de guidage (35′, 35″) le long de la trajectoire courbe formée se trouve au-dessus du siège (5) et se trouve le plus près possible de l'axe de l'articulation de la hanche (37) de la personne assise sur le siège.

4. Appareil ou véhicule suivant la revendication 1, caractérisé en ce que l'organe de renvoi (30, 31) destiné à l'élément de traction (27, 28) et disposé sur chaque levier d'entraînement (20, 21) du côté orienté vers le pédalier (7) est réalisé en tant que palet rotatif ou en tant que coulisse (33) sensiblement arquée.

5. Appareil ou véhicule suivant la revendication 1, caractérisé en ce que l'élément de traction (27, 28) flexible est fixé par l'une de ses extrémités sur le levier d'entraînement (20, 21) associé et par l'autre extrémité sur la manivelle de pédale (8, 9) associée du pédalier (7).

6. Appareil ou véhicule suivant la revendication 1 avec un dispositif pour tendre et détendre les différents éléments de transmission de force motrice pendant les phases de pédalage et de traction, caractérisé

    – en ce que, sur chaque manivelle de pédale (8, 9) est placé un autre levier (41) sur lequel, en respectant un écartement (X) par rapport au premier axe de rotation, est prévu un second axe de rotation pour les pédales (10), et

    – en ce que les deux éléments de traction (27, 28) placés par l'une de leurs extrémités sur le premier axe de rotation du bras à pédale (8, 9) et guidés sur les organes de renvoi (30, 31) prévus sur le levier d'entraînement (20, 21) sont guidés par leur autre extrémité, au moyen de galets montés sur celle-ci chacun sur un transporteur à galets (44),

    – les transporteurs à palets (44) étant placés sur des parties de palier (45) fixées sur la partie du cadre (14) en-dessous du siège (5).

## Claims

1. An apparatus with a tread crank drive, in particular a bicycle, which comprises a frame (2), a seat (5) arranged appropriately thereon for a person producing power as well as a tread crank (7) mounted on the frame (2) and provided with at least one pedal arm, onto which pedal arm force is transmitted, from the correspondingly associated leg or foot as well as from a lever system hinged to the tread crank (7) and operatively connected to the respective upper thigh of the person, to the relevant pedal arm, and thereby by way of transmission elements (11) correspondingly connected in an operative manner to the tread crank (7) a wheel (4) is able to be driven, characterised in that

    – the lever system formed to increase the force acting on the tread crank (7) is mounted with at least one drive lever (20,21) associated with the corresponding pedal arm (8,9) on a bearing support (15, 35) arranged on the frame (2), such that

    – the drive lever (20,21), on the one hand, is pivoted about a swivel pin (18', 36) located above the seat (5), and, on the other hand, is engaged with the corresponding upper thigh of the person, and in that

    – at least one flexible traction element (27, 28) is provided, which is secured at one end to a bearing (24) arranged below the seat (5), and guided by way of a deflection element (30,31) provided on the associated drive lever (20,21), together with the other end, is operatively connected to the relevant pedal arm (8,9) of the tread crank (7).

2. An apparatus according to claim 1, characterised in that the arched bearing support (15) comprises on one end a bearing housing (18), forming the swivel pin (18') arranged above the seat (5), for two drive levers (20,21) pivotally mounted laterally thereon, as well as the bearing (24) for two traction elements (27, 28) laterally mounted thereon, said bearing (24) being arranged below the seat (5) on the bearing support (15), and by means of a device (16) provided on the other end is arranged and secured on the frame part (14) of the frame (2).

3. An apparatus according to claim 1, characterised in that the bearing support (35) is arranged below the seat (5) and comprises two circular segment type guide pieces (35', 35"), which are secured laterally on the frame part (14) of the frame (2), and formed such that the swivel pin or pivoting axle (36) of the drive levers (20,21) mounted in a displaceable manner along the formed curve path in the guide pieces (35', 35") is located above the seat (5) and lies as close as possible to the hip joint axis (37) of the person sitting thereon.

4. An apparatus according to claim 1, characterised in that the deflection element (30,31) for the traction element (27, 28), arranged on the side facing the tread crank (7) on each drive lever (20,21) is formed as a rotatably mounted roller or as a substantially arched runner (33).

5. An apparatus according to claim 1, characterised in that the flexible traction element (27, 28) is secured with one end to the correspondingly associated drive lever (20,21) and with the other end to the correspondingly associated pedal arm (8,9) of the tread crank (7).

6. An apparatus according to claim 1 with a device for clamping and releasing the individual force transmission elements during the treading and traction phase, characterised in that

    – on each pedal arm (8,9) a further lever (41) is mounted, on which at a distance (X) to the first swivel pin a second swivel pin is provided for the pedals (10), and

    – that both traction elements (27,28) mounted with one end on the first swivel pin of the pedal arm (8,9) and guided by way of the deflection elements (30,31) arranged on the drive lever (20,21) are guided at the other end by means of rollers (42), arranged thereon, in each case in a roller path (44), wherein

    – the roller paths (44) are arranged in bearing parts (45) correspondingly secured below the seat (5) on the frame part (14).

FIG. 1

FIG. 5

22,23    20,21    36    5

6

a

38    39

a

38    40    35

32    24,25    15

27, 28

12

10

21    40    35"

38

39

40    35'

SCHNITT a ÷ a

23    21
17    18

32    20

15

25    24

22

32

28
27    FIG. 2
10
8
7
9
10

FIG. 3

FIG. 4

FIG. 6

FIG. 7

FIG. 8